# EUROPEAN PATENT APPLICATION

(11) **EP 0 993 942 A1**
(43) Date of publication of application: **19.04.2000**
(21) Application number: 99120022.1
(22) Date of filing: 18.10.1999
(51) Int. Cl.: B32B 27/08, B44C 5/04, E04F 15/10

(54) **Pigmented backer film and method of production**

(30) Priority: 11.02.1999 US 249033; 16.10.1998 US 173065
(71) Applicant: Premark RWP Holdings, Inc., Wilmington, Delaware 19801 (US)
(72) Inventor: Krebs, Robert R., Georgetown, Texas 78628 (US); Nelson, Thomas J., Belton, Texas 76513 (US); Williams, Joel Lane, Pendleton, Texas 76564 (US)
(74) Representative: Frohwitter, Bernhard, Dipl.-Ing.

(57) **Abstract**

A waterproof laminate panel is disclosed. The panel includes a waterproof layer that substantially prevents the penetration of moisture and may be colored with any color to substantially mask inconsistencies or non-homogeneity on the surface of the laminate panel. Coloring is specially helpful to mask stress whitening caused during manufacturing or installation of the laminate panels. Although a white or opacifying colorant is preferred, any colorant may be used for coloration. A method for producing such laminates is also described.

## Description

The ability to replicate natural materials has substantially improved over the years. For example, decorative laminates have replaced natural materials in the construction of furniture, cabinets, counter tops and other surfaces. In each of these applications, a decorative surface may be applied to a core layer or substrate, namely, plywood, particle board, chipboard, medium density fiberboard, etc. Often, a backing layer is secured to the opposite side of the substrate to balance the laminates or provide other benefits.

For example, not all decorative laminates are used in environments where their exposure to moisture may be readily controlled and monitored. Specifically, flooring panels are constantly exposed to dual competing environments which may damage the floor. Generally, flooring panels are exposed to an "A environment" above the flooring panel (that is, the controlled environment commonly found in a home or office) and a "B environment" below the flooring panel (that is, the environment existing in the floor boards, concrete, crawl spaces, etc. located below the flooring panel). Most prior art flooring panels are, however, not designed or otherwise properly adapted to exist between the competing A and B environments. However, where prior art flooring panels are designed with the competing A and B environments in mind, they employ costly and/or bulky constructions in confronting the dual environments.

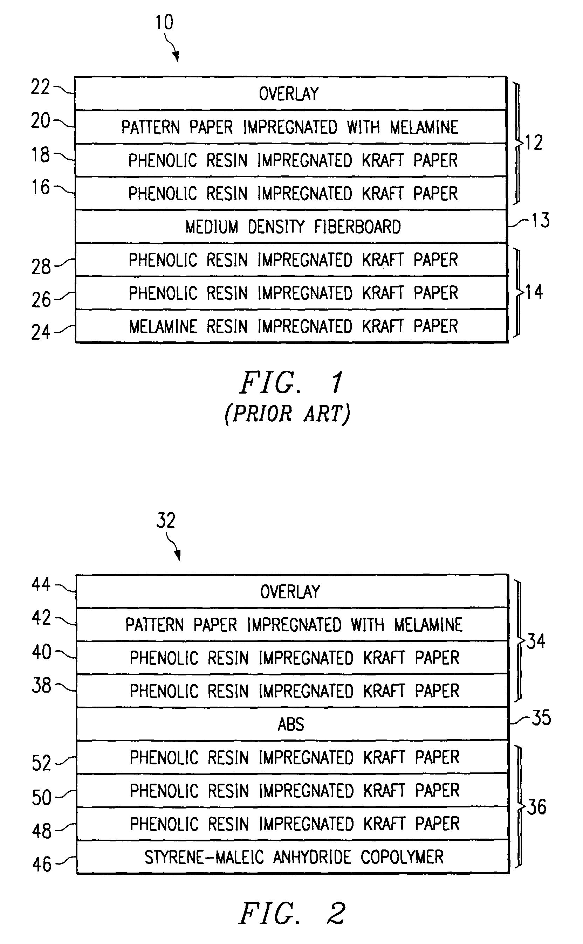

FIGURE 1 shows a prior art flooring panel. Flooring panel 10 is commonly manufactured with a decorative layer 12, a substrate 13 and a backing layer 14 as shown in FIGURE 1. Decorative layer 12 is commonly exposed to the A environment, which typically does not present the wealth of problems that the B environment presents to backing layer 14, which may subsequently affect substrate 13. Decorative layer 12 commonly consists of two layers, 16 and 18, of phenolic resin impregnated kraft paper, pattern layer 20, and melamine overlay layer 22 incorporating aluminum oxide for wear resistance. Backing layer 14, from bottom up, is commonly composed of melamine impregnated kraft paper 24 and two layers, 26 and 28, of phenolic resin impregnated kraft paper. As discussed above, substrate 13 may be chosen from a variety of materials, namely, plywood, particle board, chipboard, medium density fiberboard etc.

As those of ordinary skill in the art will appreciate, the decorative and backing layers discussed above are purely exemplary. Decorative and backing layers may take various forms and employ laminate layers in a variety of combinations.

While melamine impregnated paper acts as a barrier for water, the melamine layer reacts adversely when exposed to water vapor, or relative humidity (commonly found when water attempts to escape from moist floor boards or concrete). Similarly, the phenolic layers, and even most substrates, tend to expand substantially when exposed to moisture.

In view of the panel construction commonly employed, the decorative layer, the substrate and the backing layer react to the difference between the two environments. As in most circumstances where an object is pulled in opposite directions by multiple forces, a flooring panel sitting between two distinct and different environments will often fail to remain flat. For example, where excess moisture exists in the B environment, the flooring panel will generally expand along its bottom surface causing the flooring panel to warp with its lateral edges pointing upwardly (positive warping). Such warping is highly undesirable both aesthetically and functionally. As such there is a need for a flooring panel that is aesthetically pleasing without having any functional defects. Moreover, it is highly desirable that anomalies in the visual appearance that may appear during the manufacturing or installation process of such panels be eliminated or at least the effect of such visual anomalies be partially reduced. It is also desirable that such panels present an appearance that is acceptable to the end user. Furthermore, it is desirable that modifications to the panels may be easily implemented and consumers are able to identify such modifications as an improvement over prior art products. It is also desirable that such modifications include features that consumers expect from prior art products.

Negative warping (that is, expansion of the top layer causing the edges of the panel to bow downwardly) is less common with flooring panels since the upper surface of the flooring panels is generally not exposed to the environmental conditions which could result in the expansion of the upper surface of the flooring panels. Generally, the A environment is well controlled through the use of heating systems, air conditioners, general cleaning, and the like. For example, when water is spilled on a floor, the water will generally be wiped up or evaporate into the atmosphere before it negatively affects the top layers of the flooring panel. Similarly, relative humidity and temperature is generally controlled by the people living in the specific environment.

The prior art has previously attempted to remedy the problems associated with warping flooring panels by either attempting to balance the layers employed in the construction of the panels or employing strong backings which resist the warping forces created by the presence of moisture. Neither remedy has met with total success.

While balancing is highly successful where both sides of a laminate are exposed to the same environmental conditions, balancing does not produce similar results where the top and bottom surfaces of a laminate are exposed to very different environments, and this is where warping becomes noticeable.

The approach taken in designing backing layers when confronting moisture problems in the B environment is compounded by the testing procedures currently used throughout the industry. These testing procedures do not consider the differences between the A and B environments, but rather concentrate on the attempts to balance the expansion and contraction of the layers on opposite sides of the panel.

Specifically, conventional testing procedures suggest that the panel should be exposed to humidity levels ranging from 30% to 90% over an extended period of time. While such testing may be appropriate where the panel is to be exposed to the same environment on opposite sides, this is not the case for flooring panels which are constantly exposed to two very different environments - the environment above the flooring panel (the A environment) and the environment below the flooring panel (the B environment). The prior testing procedures fail to consider the differences and, therefore, fail to properly evaluate the appropriateness of the flooring panels for actual use.

As such, a need exists for a flooring panel which is not susceptible to the harm presented by exposure to moisture.

In addition, a need exists for a waterproof laminate which may be used in a wide range of applications.

A further need exists for a laminate product which accounts for different environments encountered on opposite sides of the laminate product.

A further need exists in the art to provide a waterproof laminate in which the appearance of the backing layer is homogeneous and without visible anomalies throughout its surface.

A still further need exists in the art for the application of a waterproof laminate which presents an appearance consistent with that of the laminates in the prior art to facilitate its acceptance and use.

Likewise a need exists in the art for the use of a waterproof laminate to be easily recognized visually in order to assure those using it of its improved features.

These and other objects, features and technical advantages are achieved through the use of a layer adapted to provide a desired level of resistance to moisture penetration, such as may be used in a decorative panel including a decorative layer and a backing layer. Preferably, a layer at the bottom of the backing layer substantially prevents the penetration of moisture whether in liquid or vapor form, and is colored, such as by using pigments and/or dyes, for a homogeneous and consistent appearance, to present an appearance consistent with backers customarily used, or to be readily identifiable with being adapted according to the present invention.

It is another object of the present invention to provide a waterproof laminate for use with decorative panels. The laminate includes a waterproofing layer which substantially prevents the penetration of moisture and at the same time provides an overall pleasant and uniform appearance.

It is a further object of the present invention to provide a laminate including a layer composed of a waterproofing layer such as a styrene-maleic anhydride copolymer layer which substantially prevents the penetration of moisture.

It is yet another object of the present invention to reduce the visual effects of stress whitening or other visual anomalies that can occur in the layer of the preferred embodiment composed of a styrene-maleic anhydride copolymer, or other polymer, copolymer, and plastic materials, during subsequent manufacturing, lamination, and installation processes.

It is yet another object of the present invention to provide a consistent, homogeneous appearance to the backing layer of the laminate, the color of which may be selected to conform with materials in common use or to present a unique, readily identifiable, appearance.

It is still another object of the present invention to provide a colored backing layer which is aesthetically pleasing without effecting the overall performance of the laminate.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims.

For a more complete understanding of the present invention, and the advantages thereof, reference is now made to the following descriptions taken in conjunction with the accompanying drawings, in which:
FIGURE 1 is a schematic of a prior art flooring panel;
FIGURE 2 is a schematic of a flooring panel in accordance with the present invention;
FIGURE 3 is a perspective view of a testing chamber;
FIGURE 4 is a schematic of a small scale testing apparatus;
FIGURE 5 is a schematic of an alternate embodiment of a backing layer;
FIGURE 6 is a schematic of a laminate made in accordance with the present invention;
FIGURE 7 is a schematic of an alternate embodiment of a laminate made in accordance with the present invention;
FIGURE 8 is a schematic of a method of making a laminate in accordance with a preferred embodiment of the present invention; and
FIGURE 9 is a schematic of a system of making a laminate in accordance with a preferred embodiment of the present invention.

Detailed description is given herein of preferred embodiments of the present invention. It should be understood, however, that the disclosed embodiments are merely exemplary of the invention, which may be embodied in various forms. Therefore, the details disclosed herein are not to be interpreted as limited, but as a basis for teaching one skilled in the art how to make and/or use the invention.

With reference to FIGURE 2, a flooring panel 32 in accordance with the present invention is disclosed. The flooring panel 32 in accordance with the present invention is not only water repellent, but it is substantially waterproof and presents a homogeneous, continuous surface which is free of visual defects. Flooring panel 32 includes decorative layer 34, substrate 35 and backing layer 36. Decorative layer 34 and backing layer 36 may be bound to opposite sides of a conventional substrate 35 such as a cellulose based substrate in a conventional manner to form flooring panel 32. Alternatively, decorative layer 34 and backing layer 36 may be bound to opposite sides of an alternative substrate 35 such as shown and described in the above referenced U.S. Patent Application entitled "System and Method for Adhering Laminate to an Alternate Substrate Material".

Decorative layer 34 includes, for example, two layers 38 and 40 of phenol formaldehyde resin impregnated kraft paper, pattern layer 42, and overlay 44 including aluminum oxide for wear resistance. The bottom resin impregnated layer 38, i.e., the back of decorative layer 34, is preferably sanded to facilitate bonding with substrate 35.

Decorative layer 34 discussed above is considered to be exemplary of decorative layers that may be used in accordance with the present invention. Decorative layers may take various forms and employ laminate layers in a variety of combinations without departing from the spirit of the present invention. As such, the resin impregnated layers of the present backing layer 36 may be varied to complement changes in decorative layer 34 without departing from the spirit of the present invention. Moreover, the waterproof layer of the present invention as discussed below may be used without corresponding use of a decorative layer and/or substrate, if desired. For example, a panel having a waterproof layer on one or all sides may be utilized in any of a number of orientations to provide a surface which is waterproof where the decorative layer described above is not desired. Furthermore, as the waterproof layer of the present invention is selectively colorable, this layer itself may be relied upon to provide a "decorative" appearance. In other words, if desired, the waterproof layer may be part of decorative layer 34 without having a corresponding backer layer or a substrate. When the waterproof layer is used as part of the decorative layer, only the decorative laminate, the phenolic resin impregnated kraft paper layers, and the waterproof layer may be required. This decorative appearance may be further enhanced through combinations of colorants, such as may be introduced in parallel in an extrusion head to provide a striped or other desired pattern.

In accordance with the preferred embodiment of the present invention, backing layer 36 includes, from bottom up, a hydrophobic layer 46 and three layers 48, 50, 52 of phenol formaldehyde resin impregnated kraft paper. As with the bottom resin impregnated layer 38 of decorative layer 34, the top resin impregnated layer 52 of the backing layer 36 is preferably sanded to facilitate bonding with substrate 35 or another material, such as a surface to be waterproofed.

The hydrophobic layer 46 is preferably a styrene-maleic anhydride copolymer, such as DYLARK^{®} manufactured by NOVA Chemicals, Inc. Styrene-maleic anhydride exhibits good thermal stability, in addition to exhibiting outstanding bonding characteristics with the phenolic resin impregnated kraft paper. The excellent bonding characteristics of styrene-maleic anhydride are a result of the carboxyl groups found on the maleic anhydride of the copolymer and therefore a number of polymers having carboxyl groups may be utilized in accordance with the present invention to provide a waterproof laminate. The carboxyl groups bind with the phenolic resin to produce a very stable laminate. Of course, where other materials are utilized in providing the laminate adapted according to the present invention, polymers having other characteristics and/or chemical composition may be utilized to provide bonding as described above.

Accordingly, although styrene-maleic anhydride copolymer is disclosed as the preferred material for providing a moisture impermeable layer according to the present invention, other functionally and structurally equivalent polymers may be used without departing from the spirit of the present invention. Likewise, although phenol formaldehyde resin impregnated kraft paper is used in accordance with the preferred embodiment of the present invention, other resin impregnated papers (or similar materials) may be used without departing from the spirit of the present invention.

Substrate 35 is preferably poly (acrylonitrile-c-butadiene-c-styrene) (ABS) foam. The above referenced U.S. Patent Application entitled "POLYMERIC FOAM SUBSTRATE AND ITS USE IN COMBINATION WITH DECORATIVE SURFACES," discloses ABS substrates which may be used in accordance with the present invention. While ABS foam is disclosed for use with the embodiment disclosed in FIGURE 2, alternate embodiments of the present invention may employ other substrate materials without departing from the spirit of the present invention. For example, ABS may be used in an alternative embodiment. Moreover, if desired, the use of a substrate material may be omitted.

The construction of backing layer 36 and substrate 35 results in a waterproof flooring panel 32 which is not susceptible to the harmful environmental conditions commonly found in the B environment. Specifically, ABS substrate 35 and styrene-maleic anhydride copolymer layer 46 create a barrier which protects the resin impregnated layers 48, 50, 52 from the undesirable effects of moisture. Furthermore, the addition of colorant, such as pigments, dyes, or the like to copolymer layer 46 masks visual anomalies in the copolymer layer as well as the resin impregnated layers 48, 50, 52, as will be discussed in further detail below.

It is not only desirable to prevent moisture from penetrating backing layer 36 but also to maintain the original as-manufactured moisture content of panel 32 to prevent panel warpage. The present invention focuses on countering the effects of the differential between the A and B environments on panel features, whether that differential involves extreme moisture or extreme dryness.

Resin impregnated layers 48, 50, 52 are preferably maintained in backing layer 36 to balance the resin impregnated layers commonly found in decorative layers which may be used in conjunction with the disclosed backing layer 36. That is, the resin impregnated layers in decorative layer 34 and backing layer 36 expand and contract similarly as a result of temperature changes to maintain the substantially flat configuration of flooring panel 32. If the resin impregnated layers 48, 50, 52 were not included in backing layer 36, decorative panel 34 may expand and contract at a different rate than backing layer 36. This would cause flooring panel 32 to warp in an undesirable manner. As such, it should be appreciated by those of ordinary skill in the art that the phenolic layers may be varied or totally eliminated without departing from the spirit of the present invention to maintain a balanced relation between backing layer 36 and decorative layer 34.

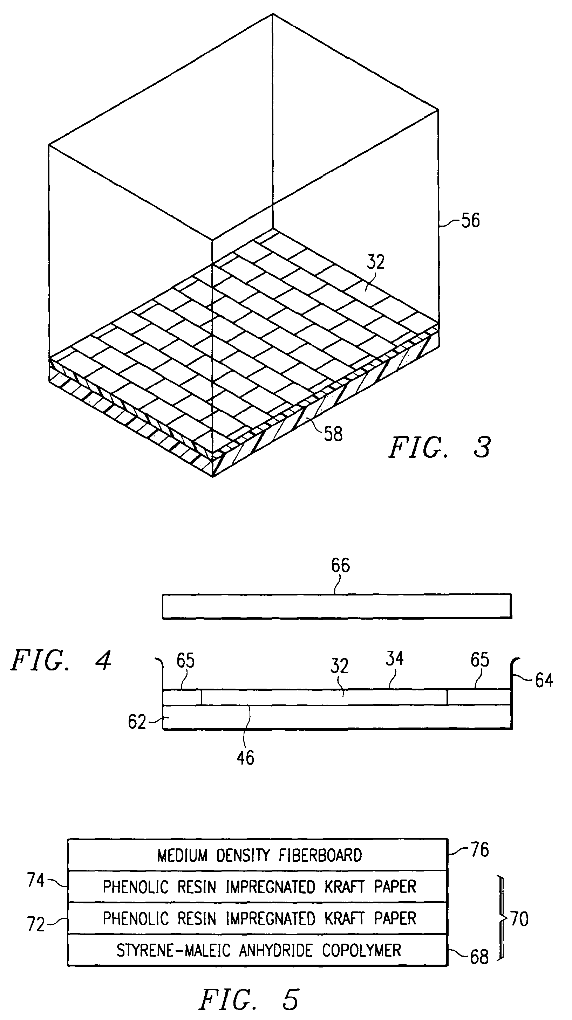

The present flooring panel 32 has been substantially tested to evaluate its reaction to moisture commonly encountered in the B environment. In accordance with the preferred embodiment of the present invention, flooring panels 32 were tested within an environmentally controlled room 56 (see FIGURE 3). Specifically, a bound polyurethane pad 58 was positioned to fully cover the floor of the environmentally controlled room 56. Pad 58 was preferably REBOND™, and is manufactured by E.R. Carpenter, Co., Temple, Texas. Pad 58 was positioned with its bottom side upwardly directed (this enhances the pad's ability to absorb water poured therein). Pad 58 was then soaked with water to simulate an extremely wet B environment.

Flooring panels were installed on the water soaked pad 58 as if they were being installed on a normal floor. The entire floor of room 56 was covered with flooring panels and molding installed about the edges of the flooring. Exposed portions of pad 58 were covered with ABS sheets to prevent water evaporation.

Once flooring panels 32 were properly installed upon the wet pad 58, the environmental conditions within room 56 were varied over seven days with the temperature ranging from approximately 50°F to 120°F (10°C to 49°C) and a relative humidity ranging from approximately 0% to 95%. After seven days in this environment, flooring panels 32 were observed and found to remain substantially flat. Control tests were also performed with prior art flooring panels. All the prior art panels tested exhibited substantial warping and degradation under test conditions.

Similar tests on a smaller scale were also conducted (see FIGURE 4). Specifically, foam pad 62 was placed in steel tray 64 sized to accommodate one or two flooring panels 32. Foam pad 62 was soaked with water and panels 32 were placed on pad 62 with a styrene-maleic anhydride copolymer layer 46 of the present invention at the bottom. The remaining exposed pad 62 was covered with ABS sheets 65 to prevent the undesired evaporation of water from pad 62. Panels 32 were then allowed to sit for approximately sixteen hours, after which heat source 66 above tray 64 was used to heat the decorative surface 34 of the flooring panels 32. Heat source 66 remained on for approximately seven hours, during which the temperature reached approximately 125°F (52°C). After seven hours of heat, the flooring panels 32 were removed and studied.

As with the large scale testing, the flooring panels 32 in accordance with the present invention exhibited an absence of warping and remained substantially flat. In addition, control tests were performed with prior art flooring panels. All the tested prior art panels exhibited substantial warping and degradation under test conditions.

The moisture barrier properties of colored styrene-maleic anhydride copolymer, as well as the bonding properties between styrene-maleic anhydride copolymer and the phenolic resin impregnated kraft paper, may be similarly incorporated with the prior art backing layer of FIGURE 1, in accordance with the present invention. Specifically, and with reference to FIGURE 5, the melamine layer of FIGURE 1 discussed above may readily be replaced with a styrene-maleic anhydride copolymer layer 68 such that backing layer 70 and substrate 76 are less susceptible to the undesirable effects of moisture. Of course, the styrene-maleic anhydride copolymer layer 68 may be applied to a melamine layer, such as layer 24 of FIGURE 1, if desired.

When styrene-maleic anhydride copolymer layer 68 is applied according to a preferred embodiment, the resulting backing layer 70 includes, from the bottom up, a styrene-maleic anhydride copolymer layer 68 and two layers 72, 74 of phenolic resin impregnated kraft paper. As with the embodiment disclosed in FIGURE 2, the resin impregnated layers may be varied to suit various applications without departing from the spirit of the present invention. Backing layer 70 is preferably bound to a medium density fiberboard or other substrate 76. In use, the styrene-maleic anhydride copolymer layer 68 protects the resin impregnated layers 72, 74 and substrate 76 from moisture which may be encountered in the B environment. Furthermore, by coloring copolymer layer 68 anomalies in the appearance of copolymer layer 68 or layer 72 disposed next adjacent may be masked, as will be discussed in detail below.

In this way, conventional flooring panels with medium density fiberboard substrates, or other substrate materials adversely effected by moisture, may be constructed such that they are resistant to the moisture problems commonly found in the B environment. Specifically, the styrene-maleic anhydride copolymer prevents water vapor from penetrating the backing layer, which would otherwise cause warpage.

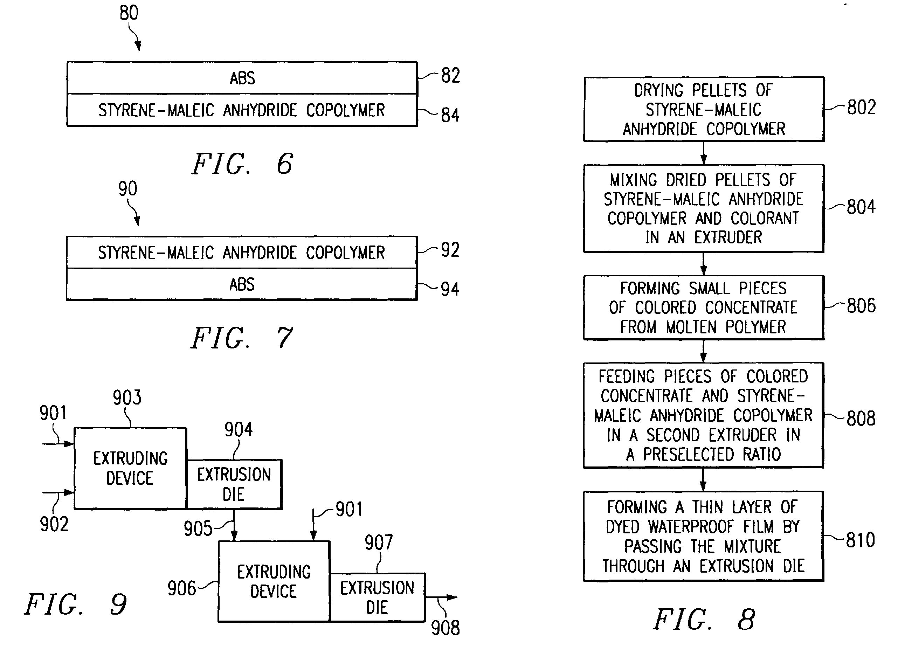

A further embodiment for a backing layer/substrate 80 is disclosed in FIGURE 6. This embodiment includes only substrate 82 and styrene-maleic anhydride copolymer layer 84. The substrate 82 is preferably ABS foam, although other substrate materials such as unfoamed ABS may be used without departing from the spirit of the present invention. The resin impregnated layers are normally included to balance the resin impregnated layers found in conventional decorative layers. The backing layer/substrate 80 consisting of an ABS foam layer 82 and a styrene-maleic anhydride copolymer layer 84 may be employed where the decorative layer is self balancing.

A further embodiment of the styrene-maleic anhydride copolymer layer/substrate 90 is disclosed in FIGURE 7. This embodiment is similar to the embodiment disclosed in FIGURE 6, except that the styrene-maleic anhydride copolymer layer 92 is exposed to the A environment instead of or in addition to the B environment. This embodiment can be useful in various applications, such as a bathroom wall panel, where it is desirable to have a waterproof layer to prevent penetration of moisture into substrate 94, and where the A environment has more moisture as compared to the B environment. If desired, the embodiment of FIGURE 7 may also be used on a roof surface, where the roof surface is exposed to excessive moisture in the form of rain, snow, sleet, etc.

In the preferred embodiment waterproof layer 46 of FIGURE 2 is colored with a colorant, such as a dye, a pigment, an opacifying agent, or any other substance capable of imparting color to the waterproof layer. An advantage of coloring this layer is that the resulting colorization may be relied upon to mask visual anomalies, such as stress whitening, that may occur in the laminate during subsequent processing, such as during the manufacturing or installation process, without affecting the overall functional performance of the laminate panel.

For example, stress whitening causes a sharp white line to appear on the styrene-maleic anhydride copolymer layer 46, particularly when the layer is subjected to stress, such as bending attendant with laying of multiple layers of laminate to make the flooring panel of FIGURE 2. Stress whitening is very common in many plastics and, in the case of laminates, makes the surface of the laminate panel look inconsistent and non-homogeneous, i.e., mottled or streaked. Once these visual inconsistencies are formed in waterproof layer 46, they carry through subsequent processing of backer layer 36, i.e. when waterproof layer 46 is pressed with the phenolic formaldehyde saturated kraft paper in a press, the effects of stress whitening visible before pressing will continue to be visible after pressing.

Although stress whitening presents no detectable adverse affects to the resulting laminate, it is generally not desirable because consumers may perceive the various visual inconsistencies, and specifically the white marks caused by stress whitening, as a defect in the product. Accordingly, as there are no known characteristics of stress whitening that adversely affect the performance of styrene-maleic anhydride copolymer when applied to backing layer 36, it is desirable that the negative effect of these visual inconsistencies in the mind of consumers be minimized.

In a preferred embodiment, the colorant used to color waterproof layer 46 is white. A white colorant is preferred because it most closely matches the color of the stress marks themselves and, therefore, makes it nearly impossible to see any such marks caused by stress whitening. Furthermore, the use of the white colorant makes the product distinctive from laminate backers presently used in flooring, and thus serves to distinguish the laminated panel of the present invention, from other laminated panels, as a product of superior quality. The addition of color or pigmentation to the film makes it easier for the consumer to verify that an additional layer of hydrophobic waterproof layer has been added to the product or to otherwise confirm that an improved product has been selected.

However, if desired, any color may be used. For example, a brown color may be used in order to conform in appearance with a customary product, as traditional backing layers used with flooring panels are brown in color. Furthermore, different colors may be used to target different consumer groups for marketing or to indicate compatibility with certain other materials, such as grey to indicate adaptation for use with concrete surfaces or brown to indicate adaptation for use with wood surfaces. Different colors could also be used at particular times of the year to indicate manufacturing lots or to correspond to or contrast with then prevailing conditions, such as the use of lighter colors during wet spring months to more easily discern marks left by handling the material with soiled hands during delivery, so that the surface could be cleaned before installation. Of course, colors may also be selected on whim, such as to conform with the spirit of the season.

An additional advantage of coloring the styrene-maleic anhydride or other copolymer film is that it may be relied upon to mask a nonhomogeneous, phenol formaldehyde resin impregnated kraft paper or other layer that is adjacent the layer of styrene-maleic anhydride copolymer film. Thus, all the backers produced may be made to possess the same uniform color and give a consistent appearance to the product consistent with products of a consistent high quality.

Furthermore, different amounts and concentration of colorant may be required depending on the degree of coloration desired. The amount of colorant used may also depend on the desired color, and also on the purpose of coloring. For example, since stress whitening produces white marks on the waterproof layer, a lesser amount of colorant may be required to mask stress whitening of the waterproof layer if the desired color is white, than would be required if the desired color is other than white. Similarly, a lower concentration of colorant may be required to mask inconsistencies in the kraft paper than is required to mask inconsistencies in the waterproof layer itself. In the preferred embodiment, the percentage of colorant used varies from 0.1 to 50. However, the percentage of colorant used may be more than 50 or less than 0.1 depending on the use and degree of coloration required. Thus, it may be desirable to balance the amount of colorant added with the selected color depending on the use.

An impact modifier such as styrene-butadiene rubber may be added to the styrene-maleic anhydride copolymer layer 46, or any other hydrophobic layer. The addition of an impact modifier makes the waterproof layer more flexible, thus reducing the effect of stress whitening due to increased flexibility and there by allowing a lesser concentration of colorant to be used in masking the effects of stress whitening.

A process called compounding may be used to make the colored waterproof layer or the colored styrene-maleic anhydride copolymer film. During compounding, the hydrophobic copolymer in its raw form such as pelletize styrene-maleic anhydride is mixed with a colorant such as under heat to allow blending of the material, to produce a colored copolymer. The colored copolymer may then be extruded and cut into small pieces to form colored concentrated pellets of styrene-maleic anhydride copolymer. The colored concentrated pellets and natural styrene-maleic anhydride copolymer pellets may then be fed into an extruder in a predetermined ratio to produce the waterproof layer of the desired color.

According to a most preferred embodiment of the compounding process, shown in FIGURES 8 and 9, commercially available pellets of styrene-maleic anhydride copolymer may be dried in step 802 to remove moisture from them. In step 804, the dried pellets 901 are added into the main feed throat of an extrusion molding device 903, such as a twin screw extruder. Of course, a single screw extruder may also be used for this purpose although a twin screw is preferred over a single screw for more even mixing of the components to be extruded. For example, in order to make better use of the equipment, a twin screw extruder, which is typically more expensive, may be utilized in this step to facilitate more efficient compounding of the different colors. The concentrated colorants produced by the method described below may then be stored and a single screw extruder utilized to produce a colored copolymer layer. The desired colorant 902 is also added to the main feed throat of extruder 903. In the preferred embodiment, the colorant used is an opacifying pigment which makes the film white or opaque. Preferably, titanium dioxide is used as the opacifying pigment, although other common white pigments such as calcium carbonate, barium sulphate, talc, magnesium silicate or some clays may also be used. Also, a polymer which is incompatible with styrene-maleic anhydride may be used as an opacifying agent, such that when this polymer is extruded with styrene-maleic anhydride, the particles of the incompatible polymer in the resulting polymer are capable of scattering light, thus making the resulting polymer opaque. However, any colorant may be used depending on the desired color. Moreover, the colorant may be added in any form such as pellets, powder, liquid, etc. The amount of colorant added depends on the degree of concentration desired. For example, if the desired final film product is one percent colorant, then during the compounding process colorant may be added at a rate between ten and twenty percent so that the material coming out of the twin screw extruder is very concentrated in color, allowing its later mixing with naturally colored material to result in the desired final concentration.

In the preferred embodiment, the colored molten polymer is forced through small holes in an extrusion die 904 in step 806. These holes may be an eighth of an inch in diameter for example, but may be of different diameters depending on the application. The extrusion die extrudes the molten polymer into long, cylindrical, "spaghetti" shaped polymer. This spaghetti shaped polymer is cooled down and cut into small pieces preferably an eighth of an inch in length. However, the length of the pieces may be varied depending on the application. The cutting process results in small cylindrical pieces, or pellets, of colored concentrate 905 coming out of the extrusion die. Water is normally involved during the cooling process. As such, the pellets are then dried to remove moisture from them. The advantage of using the process, as described above, is that it provides a consistent and uniform size of uniformly colored concentrate, which is desirable in the mixing process as described below. Moreover, by changing the settings of the extrusion die, the size of all the pellets may be changed uniformly and consistently such as to match a pellet size of naturally colored material to be mixed therewith as described below. Although a preferred process for cutting the polymer into small pieces has been described, other processes which result in colored concentrate of substantially uniform size may be used in compounding the colorant, if desired.

In producing a film of a desired color according to the preferred embodiment of FIGURE 8 in step 808, a controlled amount of the colored concentrate 905 of styrene-maleic anhydride copolymer and a controlled amount of the natural styrene-maleic anhydride copolymer 901 are fed into two separate feeders of a single screw extruder 906. Of course, a twin screw extruder may also be used for this purpose although its use is not critical as the components being mixed at this stage are more consistent in size and thus more likely to evenly blend. One of the feeders of the single screw extruder feeds the natural styrene-maleic anhydride copolymer pellets at a very rapid rate, and the second feeder feeds the concentrated pellets at a much slower rate. The rate of feeding is adjusted in either or both feeders to get the desired degree of pigmentation, e.g., the above mentioned 1% final percentage of colorant. It should be appreciated that the concentrated pellets added to the second feeders do not have to be of the same color. Concentrated pellets of different colors may be added to give a more colorful appearance to the backer or to produce desired composite colors.

In an alternative embodiment, the colored concentrate could be pre-blended with the natural styrene-maleic anhydride copolymer in the desired ratio. For example, a number of parts of concentrated styrene-maleic anhydride copolymer and natural styrene-maleic anhydride copolymer to result in the desired final degree of pigmentation could be manually combined and mixed for introduction into a film extruder through a single feeder.

In an alternative embodiment, the colored film of styrene-maleic anhydride copolymer may be made by blending the desired colorant with the natural styrene-maleic anhydride copolymer, without the use of the concentrate colored pellets. According to one such alternative embodiment, each pellet of natural styrene-maleic anhydride copolymer is coated with a very thin layer of the colorant material such as may be accomplished through the use of a dye slurry in which the pellets are dipped or the use of ion attraction due to static electricity, which may or may not be enhanced through corona treating the styrene-maleic anhydride copolymer pellets. The coated pellet is then fed into a feeder of an extruder to generate the colored film of styrene-maleic anhydride copolymer to be used as a hydrophobic layer 46.

In the preferred embodiment, the pellets are heated in the extruder and forced through the extruder by the rotating screw in step 810. The molten material is then forced into an extrusion die 907, preferably having a coat hanger type extrusion head, which has an adjustable slit opening at the end. The opening in the die is adjusted so that the film 907 coming out at the end is preferably approximately 5 mils (one mil being one thousandth of an inch) thick. The film is then preferably cast onto a chilled roll of a three roll stack. In essence, the molten polymer is cast between a first and second roll. It wraps around the second roll in an "S" shape and comes in contact between the second and third rolls. It then wraps around the third roll and is taken off. If desired, the edges of the film may be trimmed to a specific length or width, or they may be cut into desired patterns. The film itself may be cut into desired patterns based on the shape of the laminate, e.g. if the laminate is triangular, then the film may be cut into a triangular shape. The film may be imprinted with a pattern or a control number to distinguish it from other films. If desired control numbers may also be imprinted to distinguish specially manufactured films.

In another alternative embodiment, a process called solvent casting may be used to make the colored waterproof layer or the colored styrene-maleic anhydride copolymer film. During solvent casting, a predetermined amount of a hydrophobic copolymer, such as styrene-maleic anhydride copolymer, in its raw form may be added to a solvent, along with a desired amount of colorant of desired color to produce a colored solution of the hydrophobic copolymer. In the most preferred embodiment, the solvent used is capable of dissolving the hydrophobic copolymer. For example, acetone may be used as the solvent to prepare the colored solution of the hydrophobic copolymer. Also, the colorant used may dissolve in the solvent, or be dispersed in the solvent depending on the type of colorant and solvent used. For example, when the colorant used is a dye, the dye usually dissolves in the solvent. On the other hand, when the colorant is a pigment, the pigment particles may be dispersed or suspended in the solvent. In either case, a colored solution of the hydrophobic polymer is obtained.

In one embodiment, the colored solution of hydrophobic copolymer obtained by this method may be coated onto a laminate material, such as a kraft paper sheet. Any coating method or apparatus may be used for this purpose. For example, the laminate, such as a kraft paper sheet, may be coated by using a gravure coater, a kiss roll coater, a reverse roll coater, or other method suitable for coating a liquid onto a laminate material to provide a coloring suitable for the purposes of the present invention. If desired, the coated laminate material, such as kraft paper, may then be dried under controlled conditions so that a layer of the waterproof polymer is formed on the laminate material providing the desired water resistance and coloration to the laminate.

In an alternative embodiment, the colored solution of hydrophobic copolymer may be coated on a carrier sheet, such as a polyethylene or polyester sheet. The coated carrier sheet may be dried in an oven under controlled conditions such that a carrier sheet coated with dry, colored styrene-maleic anhydride copolymer is obtained. This carrier sheet may be positioned adjacent to a laminate material, such as kraft paper, with the colored styrene-maleic anhydride copolymer coated surface of the carrier sheet in contact with the kraft paper sheet. The combined kraft paper and carrier sheet may then be cured under controlled conditions with other laminate materials, such that the layer of colored styrene-maleic anhydride copolymer bonds with the kraft paper sheet. The carrier sheet used is generally inert. As such, the carrier sheet may not bond with the laminate and may then be stripped away leaving a waterproof film of the colored copolymer bonded to the laminate.

In order to get the most effective use of the colorant, it is desirable that each colorant particle be separated from the other. Therefore, if desired, dispersing agents may be added in the coloring process to provide good dispersion of the colorants in the copolymer layer. These dispersing agents are generally based on derivatives of stearic acid. However, any kind of dispersing agent may be utilized, such as molecules of different sizes that interact with the colorants to prevent agglomeration may be used without departing from the scope of the present invention. Furthermore, if desired, various techniques to disperse the colorants may be used without departing from the scope of the present invention. For example, if the extrusion mechanism does not provide the desired dispersion, other techniques may be used to provide the necessary dispersion of the colorants. Such techniques may include the use of rotors, stators, high sheer mixers, bead mills, sand mills, Hockmeyer mills etc. However, in the preferred embodiment of the present invention, dispersing agents are not added to the colorant because the dispersing agents may interfere with the adhesion or bonding between the waterproof layer and other laminate materials. The compounding methods of producing the colored layer described above have been found to generally provide adequate dispersion of the pigments, and therefore obviate the need to add dispersing agents in most circumstances. However, if desired, dispersing agents may be used without departing from the scope of the present invention.

It may be desirable to reduce the cost of the hydrophobic film of the present invention in some applications by adding fillers to the hydrophobic copolymer film, such as to provide increased bulk without increasing the copolymer requirements. Moreover, the filler may be selected depending on the desired color of the end product. If desired, the colorant may be selected to be consistent with the color of such a filler, thereby reducing the amount of colorant required as well as providing the desired uniformity in coloring. The addition of glass fibers or other types of fibers as fillers may actually improve some physical properties of the waterproof polymer by adding strength to the polymer. If desired, other fillers, such as wollastonite, zeolite, silica, alumina, kaolin clay, and the like, may be used to impart desired properties to the waterproof polymer. For example, fillers may be used to add strength to the waterproof copolymer when the laminate of the present invention is used as a bathroom partition that is not part of a structural wall. Different colors of the styrene-maleic anhydride copolymer layer may be used to make partitions of different colors and patterns. However, when the laminate panel is used in a flooring panel, it is often not desirable to add any fillers, as the fillers might make the polymer film more brittle and/or make the polymer more susceptible to moisture. This might cause problems specially in the manufacturing phase where a small nick in the edge may propagate across the width of the polymer film, and in some instances break it.

Although styrene-maleic anhydride copolymer has been disclosed as the preferred material for providing a moisture impermeable layer according to the present invention, other moisture obstructing materials may be used without departing from the spirit of the present invention. For example, it has been found that aluminum films, ABS films, and other metal films show good results when used in accordance with the present invention. In addition, it is contemplated that the following grafting monomers could copolymerize with styrene, or other monomers, and yield films which bond to the phenolic resin impregnated paper layers of the backing layer: □, □-ethylenically unsaturated carboxylic acids and anhydrides, including derivatives of such acids and anhydrides, for example, crotonic acid, acrylic acid, methacrylic acid, sorbic acid, cinnamic acid, maleic acid, fumaric acid, itaconic acid, tetrahydrophthalic anhydride, dodecenyl succinic anhydride, itaconic anhydride, maleic anhydride and substituted maleic anhydride (e.g., dimethyl maleic anhydride), monosodium maleate, disodium maleate, acrylamide, maleimide and diethyl fumarate.

In addition, although the laminates described above have been disclosed for use in the construction of flooring panels, the characteristics of the laminates make them ideal for use in a wide variety of applications. For example, the laminates may be used as ceiling panels, exterior and interior wall panels and siding, roof tops, facade boarding, counter tops, table tops, work tops, furniture or anywhere wet environments are encountered.

Although the present invention and its advantages have been described in detail, it should be understood that various changes, substitutions and alterations can be made herein without departing from the spirit and scope of the invention as defined by the appended claims.

## Claims

**1**. A decorative panel, comprising:
a decorative layer; and
a backing layer complementary to the decorative layer, wherein the backing layer is adapted to substantially prevent the penetration of moisture, and wherein the backing layer is provided with a colorant in an amount determined to mask visible anomalies of the backing layer.

**2**. The decorative panel according to claim 1, wherein the adaptation of the backing layer is characterized by a hydrophobic layer applied to the backing layer to prevent the penetration of moisture.

**3**. The decorative panel according to claim 2, wherein the hydrophobic layer is a styrene-maleic anhydride copolymer film.

**4**. The decorative panel according to any of claims 1 to 3, wherein the colorant tints the backing layer white.

**5**. The decorative panel according to any of the preceding claims, wherein the amount of colorant is a minimum amount to mask stress whitening of at least a portion of the backing layer.

**6**. The decorative panel according to any of the preceding claims, wherein the colorant tints the backing layer a color to correspond to a color of a commonly accepted backing layer.

**7**. The decorative panel according to claim 6, wherein the commonly accepted backing layer is a brown kraft paper backer.

**8**. The decorative panel according to any of the preceding claims, wherein the percentage of colorant in the backing layer is between 0.1 % and 50 %.

**9**. The decorative panel according to any of the preceding claims, wherein the backing layer includes an opacifying agent.

**10**. The decorative panel according to claim 9, wherein the colorant is provided at least in part by the opacifying agent.

**11**. The decorative panel according to either of claims 9 or 10, wherein the opacifying agent acts as a filler in the backing layer.

**12**. The decorative panel according to any of claims 9 to 11, wherein the opacifying agent is selected from titanium dioxide, calcium carbonate, barium sulphate, magnesium silicate and talc.

**13**. The decorative panel according to any of claims 9 to 12, wherein the opacifying agent is incompatible with styrene-maleic anhydride copolymer, and wherein the opacifying agent is capable of scattering light when extruded with styrene-maleic anhydride copolymer.

**14**. The decorative panel according to any of the preceding claims, wherein the backing layer includes a filler, wherein the filler provides at least a portion of the colorant.

**15**. The decorative panel according to claim 13, wherein the filler is selected from the group consisting of glass fibers, wollastonite, zeolite, silica, alumina, and kaolin clay.

**16**. The decorative panel according to any of the preceding claims, wherein the backing layer comprises a hydrophobic layer which substantially masks inconsistencies in the visual appearance of the backing layer which are associated with a layer of the backing layer not the hydrophobic layer.

**17**. The decorative panel according to claim 16, wherein the visible anomalies of the backing layer include inconsistencies caused by stress whitening of the hydrophobic layer.

**18**. The decorative panel according to any of the preceding claims, further comprising a substrate positioned between the decorative layer and the backing layer.

**19**. The decorative panel according to claim 18, wherein the backing layer comprises a hydrophobic layer and further comprises a resin impregnated paper layer positioned between the hydrophobic layer and the substrate.

**20**. The decorative panel according to claim 19, wherein the resin impregnated paper layer is a phenolic resin impregnated paper layer.

**21**. The decorative panel according to any of claims 18 to 20, wherein the substrate is acrylonitrile-c-butadiene-c-styrene (ABS).

**22**. The decorative panel according to any of the preceding claims, wherein the panel is shaped and dimensioned for use as a flooring panel.

**23.** The decorative panel according to any of the preceding claims, wherein the panel is adapted to be applied to a surface selected from a ceiling, an exterior wall, an interior wall, siding, a roof top, a facade boarding, a counter top, a table top and a work top.

**25.** The decorative panel according to any of the preceding claims, wherein the colorant tints the backing layer a color to correspond to a color of a surface to which the decorative panel is applied.

**26.** The decorative panel according to claim 25, wherein the surface is selected from a wood surface and a concrete surface.

**27.** The decorative panel according to any of the preceding claims, wherein the colorant tints the backing layer a color to distinguish the decorative panel from common decorative panels not having the hydrophobic layer.

**28.** The decorative panel according to any of the preceding claims, wherein the colorant tints the backing layer a color to indicate a manufacturing lot.

**29.** The decorative panel according to any of the preceding claims, wherein the colorant tints the backing layer a color to indicate presence of contaminants on the backing layer before installation.

**30.** The decorative panel according to any of the preceding claims, wherein the colorant is a pigment or a dye.

**31**. A laminate for use with a decorative panel, comprising:
a waterproofing layer, wherein the waterproofing layer includes at least one hydrophobic sub-layer, wherein the at least one hydrophobic sub-layer is substantially moisture resistant, and wherein the at least one hydrophobic sub-layer is colored with a pigment to substantially mask non-homogeneity in the visual appearance of the waterproofing layer.

**32**. The laminate according to claim 31, wherein the pigment imparts a white color to the hydrophobic sub-layer, and wherein the hydrophobic sub-layer is provided with a minimum amount of the pigment to mask non-homogeneity caused by stress whitening of the hydrophobic sub-layer.

**33**. The laminate according to claim 31, wherein the pigment imparts a color to the hydrophobic sub-layer, wherein the color corresponds to a color of a commonly accepted kraft paper sheet.

**34**. The laminate according to any of claims 31 to 33, wherein the percentage of the pigment in the hydrophobic sub-layer is dependent on an end use of the decorative laminate.

**35**. The laminate according to any of claims 31 to 34, wherein the amount of pigment provided to the hydrophobic sub-layer is a minimum amount necessary to impart a tint to the hydrophobic sub-layer substantially similar to a color of a surface to which the decorative panel is to be applied.

**36**. The laminate according to any of claims 31 to 35, further comprising a core layer positioned adjacent to the waterproofing layer such that the core layer is positioned distally from the at least one hydrophobic sub-layer.

**37**. The laminate according to claim 36, further comprising a decorative layer positioned adjacent to the core layer on a side distal from the waterproofing layer.

**38**. The laminate according to claim 37, wherein the decorative layer further comprises a resin impregnated paper layer.

**39**. The laminate according to either of claims 37 or 38, wherein the waterproofing layer is attached to the decorative panel.

**40**. The laminate according to any of claims 36 to 39, wherein the core layer is ABS.

**41**. The laminate according to claim 40, wherein the core layer is ABS foam.

**42**. The laminate according to any of claims 36 to 41, wherein the waterproofing layer further comprises a resin impregnated paper layer positioned between the at least one hydrophobic sub-layer and the core layer.

**43**. The laminate according to claim 42, wherein the amount of pigment provided to the hydrophobic sub-layer is a minimum amount determined to mask anomalies in the appearance of the resin impregnated paper layer.

**44**. The laminate according to either of claims 42 or 43, wherein the resin impregnated paper layer is a phenolic resin impregnated paper layer.

**45**. The laminate according to claim 44, wherein the resin impregnated paper layer is a phenol formaldehyde resin impregnated paper layer.

**46**. The laminate according to any of claims 31 to 45, wherein the hydrophobic sub-layer is a styrene-maleic anhydride copolymer layer.

**47**. The laminate according to any of claims 31 to 46, wherein the hydrophobic sub-layer includes an opacifying agent.

**48**. The laminate according to claim 47, wherein the opacifying agent is selected from titanium dioxide, calcium carbonate, barium sulphate, magnesium silicate and talc.

**49**. The laminate according to any of claims 31 to 48, wherein the non-homogeneity in the visual appearance of the waterproofing layer includes visual inconsistencies caused by stress whitening of the pigmented layer.

**50**. A method of producing laminates, comprising the steps of:
coloring a waterproof layer with a pigment to reduce visual inconsistencies in the waterproof layer; and
attaching a backing layer to complement a decorative layer, wherein the backing layer includes the colored waterproof layer.

**51**. The method according to claim 50, wherein the waterproof layer is a styrene-maleic anhydride copolymer film.

**52**. The method according to either of claims 50 or 51, further comprising the step of selecting a color for the pigment to achieve a desired end and passing a plurality of pellets of styrene-maleic anhydride copolymer through an extruder along with a predetermined amount of the pigment of the selected color forming a colored molten polymer.

**53**. The method according to claim 52, further comprising the step of cutting the colored polymer into a plurality of pieces of substantially the same size.

**54**. The method according to claim 53, further comprising the step of feeding the plurality of pieces of colored polymer along with a plurality of pellets of styrene-maleic anhydride copolymer in a preselected ratio through an extruder resulting in a molten polymer of desired concentration to mask visual inconsistencies in the waterproof layer.

**55**. The method according to claim 54, further comprising the step of passing the molten polymer through a die forming a thin layer of colored waterproof film and attaching the thin layer of film to the backing layer, wherein the thin layer of waterproof film is distal from the decorative layer.

**56**. The method according to any of claims 50 to 55, wherein the pigment is an opacifying pigment.

**57**. The method according to claim 56, wherein the opacifying pigment is selected from titanium dioxide, calcium carbonate, barium sulphate, magnesium silicate and talc.

**58**. The method according to any of claims 50 to 57, further comprising the step of selecting an amount of the pigment such that the selected amount is a minimum amount required to hide visual anomalies caused by stress whitening of the waterproof layer.

**59**. The method according to any of claims 50 to 58, further comprising the step of selecting a color of the pigment to be consistent with a color of a resin impregnated paper layer added to the backing layer.

**60**. The method according to any of claims 50 to 59, further comprising the step of selecting a color of the pigment such that the selected color imparts a tint to the backing layer to distinguish the laminate from commonly accepted laminates.

**61**. The method according to any of claims 50 to 60, further comprising the step of selecting a color of the pigment such that the selected color imparts a tint to the backing layer that is indicative of a manufacturing lot.

**62**. The method according to any of claims 50 to 61, further comprising the step of selecting a color of the pigment such that the selected color is consistent with a color of a filler that is added to the waterproof layer.

**63**. A colored laminate, comprising:
a substrate having a first side and a second side;
a decorative layer attached to the first side of the substrate, wherein the decorative layer includes a decorative paper layer and a resin impregnated paper layer positioned between the decorative paper layer and the substrate; and
a backing layer attached to the second side of the substrate, wherein the backing layer includes a selectively colored layer that substantially prevents the penetration of moisture, wherein the backing layer further includes a resin impregnated paper layer positioned between the colored layer and the second side of the substrate.

**64**. The colored laminate according to claim 63, wherein the colored layer is a styrene-maleic anhydride copolymer layer.

**65**. The colored laminate according to either of claims 63 or 64, wherein a color of the colored layer is selected to distinguish the laminate from commonly available laminates.

**66**. The colored laminate according to any of claims 63 to 65, wherein a degree of coloring of the colored layer is a minimum to mask visual anomalies in the colored layer.

**67**. The colored laminate according to any of claims 63 to 66, wherein a color of the colored layer is selected to mask visual inconsistencies in the resin impregnated paper layer of the backing layer.

**68**. The colored laminate according to any of claims 63 to 67, wherein a color of the colored layer is selected to indicate that the layer substantially prevents the penetration of moisture.

**69**. A method of producing a laminate, comprising the steps of:
determining a visible characteristic to modify in a layer of the laminate;
selecting a colorant to result in the modification of the visible characteristic of the laminate;
determining an amount of the colorant required to result in the modification of the visible characteristic of the laminate; and
coloring a waterproof layer of the laminate with the determined amount of the colorant.

**70**. The method according to claim 69, wherein the visible characteristic to modify is non-homogeneity in the visual appearance of the waterproof layer.

**71**. The method according to claim 70, wherein the non-homogeneity is caused by stress whitening of the waterproof layer.

**72**. The method according to any of claims 69 to 71, wherein the visible characteristic to change is visual inconsistency in a layer adjacent to the waterproof layer.

**73**. The method according to claim 72, wherein the layer adjacent to the waterproof layer is a brown kraft paper layer.

**74**. The method according to any of claims 69 to 73, wherein the waterproof layer is a styrene-maleic anhydride copolymer layer.

**75**. The method according to any of claims 69 to 74, further comprising the step of masking the visual inconsistency in the layer adjacent to the waterproof layer.

**76**. The method according to any of claims 69 to 75, further comprising the step of masking the non-homogeneity caused by stress whitening of the waterproof layer.

**77**. The method according to any of claims 69 to 76, further comprising the step of tinting the waterproof layer to correspond to a color of a commonly accepted laminate.

**78**. The method according to any of claims 69 to 77, further comprising the step of tinting the waterproof layer to correspond to a color of a surface to which the laminate is applied.

**79**. The method according to claim 78, wherein the surface is selected from the group consisting of a wood surface and a concrete surface.

**80**. The method according to any of claims 69 to 79, further comprising the step of tinting the waterproof layer to a color to distinguish the laminate from laminates not having the waterproof layer.

**81**. The method according to any of claims 69 to 80, further comprising the step of tinting the waterproof layer a color to indicate a manufacturing lot.

**82**. The method according to any of claims 69 to 81, further comprising the step of tinting the waterproof layer a color to easily discern blemishes left on the waterproof layer during handling of the laminate.

**83**. The method according to any of claims 69 to 82, wherein the amount of the colorant is a minimum amount to mask stress whitening of the waterproof layer.

**84**. The method according to any of claims 69 to 83, wherein the percentage of the colorant in the waterproof layer is between 0.1 and 50.

**85**. The method according to any of claims 69 to 84, wherein the waterproof layer comprises an opacifying agent.

**86**. The method according to claim 85, wherein the colorant is provided at least in part by the opacifying agent.

**87**. The method according to either of claims 85 or 86, wherein the opacifying agent acts as a filler in the waterproof layer.

**88**. The method according to any of claims 85 to 87, wherein the opacifying agent is selected from titanium dioxide, calcium carbonate, barium sulphate, magnesium silicate, and talc.

**89**. The method according to any of claims 69 to 88, wherein the waterproof layer comprises a filler, and wherein the filler provides at least a portion of the colorant.

**90**. The method according to any of claims 69 to 89, wherein the coloring step is characterized by the steps of:
passing a plurality of pellets of styrene-maleic anhydride copolymer and the determined amount of the selected colorant through an extruder forming a colored molten polymer;
cutting the colored molten polymer into a plurality of pieces of substantially the same size;
feeding the plurality of pieces of colored polymer along with another plurality of pellets of styrene-maleic anhydride copolymer in a preselected ratio through another extruder resulting in another molten polymer;
forming a thin layer of colored waterproof film from the another molten polymer;
attaching the thin layer of colored waterproof film to a backing layer of the laminate;
bonding the backing layer to a first surface of a substrate; and
adhering a decorative layer to a second surface of the substrate, wherein the second surface is opposite from the first surface.

**91**. A method of producing laminates, comprising the steps of:
selecting a colorant to achieve a desired end;
determining an amount of the colorant required to achieve the desired end;
adding a predetermined amount of styrene-maleic anhydride copolymer and the determined amount of the colorant in a solvent to form a colored solution; and
coating a laminate material with the colored solution, thereby forming a colored waterproof layer on the laminate material.

**92**. The method according to claim 91, wherein the coating step comprises coating a carrier sheet with the colored solution.

**93**. The method according to claim 92, wherein the coating step further comprises the step of:
positioning the coated carrier sheet adjacent to the laminate material with the coated surface of the carrier sheet touching the laminate material.

**94**. The method according to claim 93, wherein the coating step further comprises the step of:
curing the carrier sheet under controlled conditions thereby forming the colored waterproof layer on the laminate material, wherein the carrier sheet does not bond with the laminate material.

**95**. The method according to any of claims 92 to 94, wherein the carrier sheet is inert.

**96**. The method according to any of claims 91 to 95, wherein the solvent is capable of dissolving the predetermined amount of styrene-maleic anhydride copolymer.

**97**. The method according to any of claims 91 to 96, wherein the solvent is capable of dissolving the determined amount of the colorant.

**98**. The method according to any of claims 91 to 97, wherein the colorant is a dye.

**99**. The method according to any of claims 91 to 98, wherein the colorant is dispersed in the solvent.

**100**. The method according to any of claims 91 to 99, wherein the colorant is a pigment.

**101**. The method according to any of claims 91 to 100, wherein the solvent is acetone.

**102**. The method according to any of claims 91 to 101, wherein the desired end is to modify non-homogeneity in the visual appearance of the laminate material.

**103**. The method according to any of claims 91 to 102, wherein the laminate material is a brown kraft paper.
